# NEUE EUROPÄISCHE PATENTSCHRIFT

(11) **EP 1 062 877 B2**
(45) Veröffentlichungstag und Bekanntmachung des Hinweises auf die Entscheidung über den Einspruch: **12.09.2007**
(45) Hinweis auf die Patenterteilung: 04.08.2004
(21) Anmeldenummer: 00112997.2
(22) Anmeldetag: 21.06.2000
(51) Int. Cl.: A23K 1/00, A23K 1/16

(54) **Wässrige Lysin-haltige Tierfuttermittelsupplemente und Verfahren zur Herstellung**
Aqueous lysine-containing feed supplement and method for its preparation
Additif fourragé aqueux pour animaux contenant lysin et procédé pour sa préparation

(30) Priorität: 23.06.1999 US 140449 P
(43) Veröffentlichungstag der Anmeldung: 27.12.2000
(73) Patentinhaber: Degussa GmbH, 40474 Düsseldorf (DE)
(72) Erfinder: Binder, Michael, Dr., 33803 Steinhagen (DE); Uffmann, Klaus, 33611 Bielefeld (DE)

(56) Entgegenhaltungen:
- EP-A- 0 533 039
- EP-A- 0 534 865
- EP-A- 0 923 878
- DD-A- 248 810
- DE-A- 2 357 119
- GB-A- 1 439 121
- GB-A- 1 439 728
- Römpp Chemie Lexikon, Seite 4568,9.Auflage
- Leibniz Institut für Agrartechnik Bornim e.V. "Forschungsberichte des ATB Nr. 2003/2, S. 14
- Wuppertal Institut. IE Leipzig FHG-Umsicht : Analyse und Bewertung der Nutzungsmöglichkeiten von BGW und DVGW". Bericht 2006, Seite 25

## Beschreibung

Die Erfindung betrifft wässrige L-Lysin-haltige Tierfuttermittelsupplemente, die Mikroorganismen und diese vorzugsweise inaktiviert aus der Fermenation enthalten, und ein Verfahren zur Herstellung dieser Zubereitungsform.

### Stand der Technik

Die essentielle Aminosäure L-Lysin wird in großem Umfang als Tierfuttermittelsupplement eingesetzt.

Es ist bekannt, daß L-Lysin durch Fermentation von Stämmen coryneformer Bakterien insbesondere Corynebacterium glutamicum hergestellt wird. Wegen der großen Bedeutung wird ständig an der Verbesserung der Herstellverfahren gearbeitet. Verfahrensverbesserungen können die intrinsischen Leistungseigenschaften der Mikroorganismen durch z. B. Mutagenese und Selektion, fermentationstechnische Maßnahmen wie z.B. Rührung und Versorgung mit Sauerstoff, die Zusammensetzung der Nährmedien wie z.B. die Zuckerkonzentration während der Fermentation, oder die Aufarbeitung zur Produktform durch z.B. Ionenaustauschchromatographie oder Kristallisation betreffen.

Nach dem Stand der Technik kennt man drei verschiedene Gruppen von L-Lysin haltigen Produktformen, die aus L-Lysin-haltigen Fermentationsbrühen hergestellt werden.

Die bekannteste Gruppe sind pulverformige oder kristalline Produktformen von aufgereinigtem bzw reinem L-Lysin, das typischerweise in Form eines Salzes wie z. B. L-Lysin-Monohydrochlorid vorliegt.

Eine weitere Gruppe fester Produktformen, wie beispielsweise in der EP-B-0533039 beschrieben, enthält neben L-Lysin die während der fermentativen Herstellung verwendeten Einsatzstoffe und gegebenfalls die inaktivierte Biomasse des eingesetzten Mikroorganismus.

Pulverförmige, kristalline oder auch granulierte Produktformen weisen deutliche Nachteile in der Handhabbarkeit und Anwendung auf. Witterungseinflüsse wie zum Beispiel hohe Luftfeuchtigkeit beeinflussen in beträchtlichem Maße die Qualität des Produktes, da sie aufgrund von möglicher Verklumpung die Lagerfähigkeit und Dosierung des Produktes in der Anwendung beeinträchtigen. Die Verarbeitung von trockenem, pulverförmigem L-Lysin haltigen Produkten kann wiederum zu einer unerwünschten Staubentwicklung führen.

Die dritte Gruppe L-Lysin haltiger Produkte umfasst konzentrierte, wässrige, alkalische Lösungen und umgeht auf diese Weise die oben genannten Probleme (EP-B-0534865).

Entsprechend der verschiedenen Produktformen kennt man verschiedenste Verfahren zur Herstellung L-Lysin haltiger Produkte aus L-Lysin haltigen Fermentationsbrühen.

Zur Herstellung von festem, reinem L-Lysin sind zur Zeit im wesentlichen zwei verschiedene Verfahren bekannt.

Lysin kann als Monohydrochlorid (Lys-HCl) durch Kristallisation aus den entsprechenden Fermentationsbrühen gewonnen werden, nachdem die inaktivierte Biomasse durch geeignete Methoden abgetrennt worden ist. Die Aufreinigung des Filtrates vor einer weiteren Aufkonzentration erfolgt im allgemeinen durch Ionenaustauschchromatographie über mehrere Stufen. Dabei wird zunächst durch die bevorzugte Zugabe von Salzsäure (HCl) oder Schwefelsäure (H₂SO₄) die von der Biomasse abgetrennte Fermentationsbrühe angesäuert, um eine Adsorption des Lysins an den Austauscherharzen zu erleichtern. Neben dem fermentativ hergestellten L-Lysin werden unspezifisch verschiedene andere Kationen gebunden, welche in der Fermentationsbrühe vorliegen. Im allgemeinen sind verschiedene hintereinander geschaltete Austauschersäulen notwendig, um ein reines Produkt zu erhalten. Das adsorbierte Lysin wird anschließend bevorzugt durch eine ammoniakalische Lösung eluiert und die Ionenaustauschersäule regeneriert. Die derart gewonnene Lysin-Lösung wird sodann aufkonzentriert und nach Neutralisation mit Salzsäure Lysin-HCl in kristalliner Form gewonnen.

Eine andere Methode ermöglicht die Gewinnung des Lysins in Form eines kristallinen Salzes nach einer Aufreinigung mit Aktivkohle (SU-183581). Dabei wird die lysinhaltige Fermentationsbrühe durch Standardverfahren mittels feuchter Hitze inaktiviert und durch Filtration von der Biomasse abgetrennt. Nach der Ansäuerung des Filtrats auf pH 5 werden 4 - 5% Aktivkohle unter ständigem Rühren bei 50 - 55°C zugegeben, um unerwünschte Verunreinigungen aus dem Filtrat abzutrennen und die Verfärbung des Kristallisates zu vermeiden. In einer sich anschließenden weiteren Filtration wird die Aktivkohle abgetrennt und danach durch Zugabe von Calciumhydroxid das gelöste Sulfat als Calciumsulfat ausgefällt. Dieses wird abfiltriert, der Ammoniakanteil im Rotationsverdampfer unter Vakuum entfernt und die Lösung soweit eingeengt, bis unter Kühlung die Auskristallisation eintritt.

Der Nachteil dieser beiden Aufarbeitungsmethoden besteht in den vielen einzelnen Arbeitsschritten und aufwendigen Reinigungsverfahren mittels Ionenaustauschchromatographie. Durch die Eliminierung störender Salze bzw. den Einsatz verschiedener Elutionsmedien entstehen zusätzliche Abfallströme, die entweder aufwendig gereinigt oder teuer entsorgt werden müssen.

Diesen Nachteilen wird in der EP-B-0533039 dadurch begegnet, daß der gesamte Fermentationsansatz gegebenenfalls einschließich der Biomasse aufkonzentriert und bei hoher Temperatur sprühgetrocknet wird.

Im US-A 5,990,350 wird ein Verfahren zur Herstellung eines Biomasse-freien L-Lysin-haltigen Granulates beschrieben. Bei diesem Verfahren wird zunächst die Biomasse aus der Fermentationsbrühe mittels Ultrafiltration abgetrennt und verworfen. Das derart gewonnene Filtrat wird anschließend durch weitgehende Verdampfung des Wasseranteils aufkonzentriert. Das auf diesem Wege gewonnene Konzentrat wird schließlich aufwendig durch Sprühgranulation in der Wirbelschicht zu einem Granulat getrocknet und aufgearbeitet.

In der EP-B-0534865 ist ein Verfahren zur Herstellung wässriger, basischer L-Lysin haltiger Lösungen aus Fermentationsbrühen bekannt. Bei dem dort beschriebenen Verfahren wird die Biomasse aus der Fermentationsbrühe abgetrennt und verworfen. Mittels einer Base wie beispielsweise Natrium-, Kalium- oder Ammoniumhydroxid wird ein pH-Wert zwischen 9 bis 11 eingestellt. Die mineralischen Bestandteile (anorganischen Salze) werden nach Konzentrierung und Abkühlung durch Kristallisation aus der Brühe abgetrennt und entweder als Dünger verwendet oder verworfen (deponiert).

### Aufgabe der Erfindung

Die Aufgabe der Erfindung besteht darin neue, wässrige, als Futtermittelsupplement geeignete Zubereitungsformen des L-Lysins und seiner Salze zur Verfügung zu stellen.

Weiterhin ist es eine Aufgabe der Erfindung, ein Verfahren zur Herstellung zur Verfügung zu stellen, das ökonomischer und leistungsstärker als die gegenwärtig bekannten Verfahren ist.

### Beschreibung der Erfindung

Die essentielle Aminosäure Lysin wird in großem Umfang als Tierfuttermittelsupplement eingesetzt.

Mikroorganismen der Gattung Corynebacterium zeichnen sich durch die Fähigkeit aus, in relativ kurzer Zeit hohe Konzentrationen an L-Lysin in das entsprechende Fermentationsmedium auszuscheiden. Die Produktionspozesse erfolgen im allgemeinen als Zulaufverfahren (Fedbatch). Fermentativ hergestelltes L-Lysin wird derzeit vorwiegend zum kristallinen Produkt, Pulver oder Granulat aufgearbeitet.

Gegenstand der Erfindung ist ein Tierfuttermittel-Supplement auf Fermentationsbrühebasis, dadurch gekennzeichnet, dass es aus
a) L-Lysin und/oder deren Salzen,
b) der während der Fermentation gebildeten Biomasse in einer Menge von 50 bis 100 % und ganz besonders von 90 bis 100 %,
c) zumindest dem überwiegenden Teil der weiteren gelösten und suspendierten Inhaltsstoffe der Fermentationsbrühe besteht,
d) als Suspension vorliegt und
e) einen pH von < (kleiner) 7 aufweist.

Das Tierfuttermittel-Supplement besitzt einen Lysin-Gehalt (als Lysin-Base) von 18 Gew.-% bis 35 Gew.-% und besonders bevorzugt 21 Gew.-% bis 34 Gew.-%, bezogen auf die Gesamtmenge des Supplements. Der pH beträgt < (kleiner) 7, bevorzugt 2 bis 6,5, besonders bevorzugt 2,5 bis 6 und ganz besonders bevorzugt 2,5 bis 5.

Der Anteil der Gesamttrockenmasse des Supplements beträgt 10 Gew.-% bis 55 Gew.-%, bevorzugt 20 Gew.-% bis 55 Gew.-%, besonders bevorzugt 35 Gew.-% bis 55 Gew.-% und ganz besonders bevorzugt 45 Gew.-% bis 54 Gew.-%. Die Trockenmasse enthält neben Lysin
- die Biomasse des produzierenden Mikroorganismus,
- die anorganischen und die weiteren organischen Bestandteile der Fermentationsbrühe und
- die während der Fermentation gebildeten Nebenprodukte,
soweit sie nicht durch geeignete Verfahren wie z.B. Separation oder Filtration abgetrennt wurden.

Wird die Biomasse vollständig oder teilweise im Supplement belassen, so enthält dieses das Protein des Mikrorganismus in einer Konzentration bis maximal 4 Gew.-%.

Das Supplement enthält als anorganische Bestandteile unter anderem Calcium, Magnesium, Phosphor in Form von Phosphat, und Schwefel in Form von Sulfat und als organische Bestandteile unter anderem Vitamine wie z. B. Biotin und Thiamin oder Zucker wie z. B. Isomaltose.

Zu den während der Fermentation in geringen Mengen gebildeten organischen Nebenprodukten gehören L-Aminosäuren ausgewählt aus der Gruppe L-Alanin, L-Asparagin, L-Glutamin, L-Methionin, L-Threonin und L-Valin. Weiterhin gehören dazu organische Säuren, die ein bis drei CarboxylGruppen tragen wie z. B. Milchsäure, Essigsäure und Äpfelsäure. Schließlich gehören dazu auch Zucker wie z. B. Trehalose.

Diese Verbindungen sind gegebenenfalls erwünscht, wenn sie die Wertigkeit des Supplements verbessern.

Ein weiterer Gegenstand der Erfindung ist ein Verfahren zur Herstellung von wässrigen Lysin und/oder deren Salze enthaltenden Suspensionen, bestehend aus den Schritten :
a) Herstellung einer L-Lysin -haltigen Brühe durch Fermentation, und
b) gegebenenfalls durch Zugabe von L-Lysin oder einer L-Lysin haltigen Lösung Einstellung der gewünschten Konzentration,
c) Einstellung der erhaltenen Brühe auf einen pH < (kleiner) 7 und
d) gegebenenfalls Aufkonzentration,
   wobei die Reihenfolge der Schritte b), c) und d) beliebig sein kann, und
e) Gewinnung eines Produkts gemäß den Ansprüchen 1 bis 3 mit einem Gehalt von 18 bis 35 Gew.-% L-Lysin (als L-Lysin-Base).

Ein weiterer Gegenstand der Erfindung ist schliesslich ein Verfahren zur Herstellung von wässrigen Lysin und/oder deren Salze enthaltenden Suspensionen, bestehend aus den Schritten :
a) Herstellung einer L-Lysin-haltigen Brühe durch Fermentation, und
b) Einstellung der erhaltenen Brühe auf einen pH-Wert < (kleiner) 7 und
c) aus dieser gegebenenfalls teilweise Abtrennung der Biomasse,
d) gegebenenfalls durch Zugabe von L-Lysin oder einer L-Lysin haltigen Lösung Einstellung der gewünschten Konzentration,
e) und gegebenenfalls Konzentrieren der so erhaltenen Brühe,
   wobei die Reihenfolge der Schritte b), c), d) und e) beliebig sein kann, und
f) Gewinnung eines Produkts gemäß den Ansprüchen 1 bis 3 mit einem Gehalt von 18 bis 35 Ges.-% (als L-Lysin-Base).

L-Lysin produzierende Mutanten coryneformer Bakterien sind ausführlich im Stand der Technik wie z. B. in der US-A-4,657,860 beschrieben.

Diese Stämme können kontinuierlich oder diskontinuierlich im batch - Verfahren (Satzkultivierung) oder im fed batch (Zulaufverfahren) oder repeated fed batch Verfahren (repetitives Zulaufverfahren) zum Zwecke der L-Lysin Produktion kultiviert werden. Eine Zusammenfassung über bekannte Kultivierungsmethoden sind im Lehrbuch von Chmiel (Bioprozesstechnik 1. Einführung in die Bioverfahrenstechnik (Gustav Fischer Verlag, Stuttgart, 1991)) oder im Lehrbuch von Storhas (Bioreaktoren und periphere Einrichtungen (Vieweg Verlag, Braunschweig/Wiesbaden, 1994)) beschrieben.

Das zu verwendende Kulturmedium muß in geeigneter Weise den Ansprüchen der jeweiligen Stämme genügen. Als Kohlenstoffquelle können Zucker und Kohlehydrate wie z.B. Glucose, Saccharose, Lactose, Fructose, Maltose, Melasse, Stärke und Cellulose, Öle und Fette wie z. B. Sojaöl, Sonnenblumenöl, Erdnussöl und Kokosfett, Fettsäuren wie z. B. Palmitinsäure, Stearinsäure und Linolsäure, Alkohole wie z. B. Glycerin und Ethanol und organische Säuren wie z. B. Essigsäure verwendet werden. Diese Stoffe können einzeln oder als Mischung verwendet werden. Als Stickstoffquelle können organische, Stickstoff-haltige Verbindungen wie Peptone, Hefeextrakt, Fleischextrakt, Malzextrakt, Maisquellwasser, Sojabohnenmehl und Harnstoff oder anorganische Verbindungen wie Ammoniumsulfat, Ammoniumchlorid, Ammoniumphosphat, Ammoniumcarbonat und Ammoniumnitrat verwendet werden. Die Stickstoffquellen können einzeln oder als Mischung verwendet werden. Als Phosphorquelle können Kaliumdihydrogenphosphat oder Dikaliumhydrogenphosphat oder die entsprechenden Natriumhaltigen Salze verwendet werden. Das Kulturmedium muß weiterhin Salze von Metallen enthalten wie z.B. Magnesiumsulfat oder Eisensulfat, die für das Wachstum notwendig sind. Schließlich können essentielle Wuchsstoffe, wie Aminosäuren und Vitamine zusätzlich zu den oben genannten Stoffen eingesetzt werden. Dem Kulturmedium können überdies geeignete Vorstufen zugesetzt werden. Die genannten Einsatzstoffe können zur Kultur in Form eines einmaligen Ansatzes hinzugegeben oder in geeigneter Weise während der Kultivierung zugefüttert werden.

Zur pH - Kontrolle der Kultur werden basische Verbindungen wie Natriumhydroxid, Kaliumhydroxid, Ammoniak oder saure Verbindungen wie Phosphorsäure oder Schwefelsäure in geeigneter Weise eingesetzt. Zur Kontrolle der Schaumentwicklung können Antischaummittel wie z.B. Fettsäurepolyglykolester eingesetzt werden. Zur Aufrechterhaltung der Stabilität von Plasmiden können dem Medium geeignete selektiv wirkende Stoffe, z.B. Antibiotika, hinzugefügt werden. Um aerobe Bedingungen aufrechtzuerhalten werden Sauerstoff oder Sauerstoffhaltige Gasmischungen wie z.B. Luft in die Kultur eingetragen und durch geeignete Rührsysteme oder den Gasstrom durchmischt. Die Temperatur der Kultur liegt typischerweise bei 25°C bis 37°C. Die Kultur wird solange fortgesetzt bis sich ein Maximum an L-Lysin gebildet hat. Dieses Ziel wird normalerweise innerhalb von 10 Stunden bis 160 Stunden erreicht.

Beispiele für geeignete Fermentationsmedien finden sich beispielsweise in den Patentschriften EP-B-0 532 867, US-A-5,840,551 und US-A-5,990,350.

Die Analyse von L-Lysin kann durch Anionenaustauschchromatographie mit anschließender Ninhydrin Derivatisierung erfolgen so wie bei Spackman et al. (Analytical Chemistry, 30, (1958), 1190) beschrieben, oder sie kann durch reversed phase HPLC erfolgen so wie bei Lindroth et al. (Analytical Chemistry (1979) 51: 1167-1174) beschrieben.

Die für das erfindungsgemäße Verfahren eingesetzten Fermentationsbrühen besitzen vorzugsweise einen Gehalt an L-Lysin > (größer) 60 g/L (als Lysinbase) bei einem Anteil an nicht verstoffwechseltem (metabolized) Zucker < (kleiner) 5,0 g/L. Bei einem Gesamttrockenmassenanteil von > 10 Gew.-% liegt der Anteil der Biotrockenmasse vorzugsweise bei 1 bis 4 Gew.-%. Der Gehalt an Nebenprodukten und Vitaminen aus der Fermentation (Aminosäuren, organische Säuren) liegt dabei bevorzugt < (kleiner) 2 Gew.-%.

Bei dem erfindungsgemäßen Verfahren wird die in der Fermentationsbrühe vorhandene Biomasse im allgemeinen zunächst durch eine beispielsweise thermische Behandlung inaktiviert bzw. abgetötet. Gegebenenfalls kann die Inaktivierung aber auch entfallen. Anschließend stellt man in der Fermentationsbrühe mittels einer anorganischen Säure wie z. B. Schwefelsäure, Salzsäure, oder Phosphorsäure oder einer organischen Säure wie z.B. Citronensäure, Essigsäure oder Ameisensäure oder einer Mischung von verschiedenen Säuren einen pH-Wert von < (kleiner) 7, bevorzugt 2 bis 6,5, besonders bevorzugt 2,5 bis 6 und ganz besonders bevorzugt 2,5 bis 5 ein. Gegebenenfalls wird vor oder nach der Ansäuerung die Biomasse mit allgemein bekannten Methoden der Separation oder Filtration teilweise abgetrennt. Eine Abtrennung der mineralischen Bestandteile ist im allgemeinen nicht erforderlich. Die saure L-Lysin-haltige. Suspension wird anschließend mit bekannten Methoden (wie beispielsweise Rotationsverdampfer, Dünnschichtverdampfer oder Fallfilmverdampfer) vorzugsweise unter Vakuum aufkonzentriert, bis man ein flüssiges Produkt mit einem Gehalt an Lysin (als L-Lysin-Base) von bevorzugt 20 Gew.-% bis 35 Gew.-% und ganz besonders bevorzugt 21 Gew.-% bis 34 Gew.-%, bei einem Gehalt an Gesamttrockenmasse von 10 Gew.-% bis 55 Gew.-%, bevorzugt 20 Gew.-% bis 55 Gew.-%, besonders bevorzugt 35 Gew.-% - 55 Gew.-% und ganz besonders bevorzugt 45 Gew.-% bis 54 Gew.-% erhält. Es gilt allgemein, daß die Brühe so eingeengt wird, daß bevorzugt keine mineralischen Bestandteile (anorganische Salze) aus der Fermentationsbrühe ausfallen und das Lysin gelöst vorliegt. Gegebenfalls kann eine gewünschte Konzentration an L-Lysin im Produkt durch Zugabe eines L-Lysin haltigen Stoffes während eines beliebigen Verfahrensschrittes eingestellt werden.

Die auf diese Weise gewonnene Suspension besitzt einen sauren pH-Wert, ist einfach transportierbar, ohne Probleme zu dosieren, mikrobiell stabil und besser lagerfähig als eine alkalische Lösung.

Die Ansäuerung kann auch nach oder während der Aufkonzentrierung vorgenommen werden. Die als Sulfat, Chlorid, Phosphat, Citrat ect. fungierenden Anionen können schon vor der Fermentation dem Medium in Form von handelsüblichen Salzen zugeführt werden.

Der Begriff Suspension berücksichtigt, daß die bevorzugt inaktivierten Mikroorganismen ungelöst in dem erfindungsgemäßen Produkt vorliegen.

### Beispiele

Die vorliegende Erfindung wird im folgenden anhand von Ausführungsbeispielen näher erläutert.

### Beispiel 1

### Herstellung einer L-Lysin haltigen Fermentationsbrühen

Fermentationsverfahren zur Herstellung lysinhaltiger Brühen, welche erfindungsgemäß aufgearbeitet werden, sind in verschiedenen vorausgegangenen Patenten (EP-B 0 532 867 und US-A 5,840,551) ausführlich beschrieben worden.

### Beispiel 2 (nicht Gegenstand der Erfindung)

### Herstellung eines Biomasse-freien Produktes

Gemäß Beispiel 1 wurden 20 kg einer Fermentationsbrühe mit einem Gehalt von ca. 9,5 Gew.- % (als Lysinbase) hergestellt. Die in der Fermentationsbrühe vorhandene Biomasse wurde zunächst durch eine thermische Behandlung für 30 Minuten bei 80°C inaktiviert. Die inaktivierte Biomasse wurde anschließend durch Zentrifugation für 20 Minuten bei 4000 rpm (Laborzentrifuge Biofuge-Stratos, Heraeus, Düsseldorf, Deutschland) abgetrennt. 1,0 l des derart geklärten Überstandes wurden durch schrittweise Zugabe konzentrierter Schwefelsäure auf einen pH-Wert von ca. 4 eingestellt. Im Zentrifugat wurde anschließend an einem Rotationsverdampfer (Laborrotationsverdampfer Büchi Rotavapor RE-120, Büchi-Labortechnik GmbH, Konstanz, Deutschland) unter Vakuum der Flüssigkeitsanteil auf etwa 50% Trockengehalt reduziert.

Das auf diese Weise erhaltene flüssige Produkt hatte einen Gehalt an L-Lysin von 31,5 Gew.-% (als Lysin-Base) und einen pH-Wert von 4. Die Gesamttrockenmasse betrug 49,3 Gew.-%.

### Beispiel 3

### Herstellung eines Biomasse-haltigen Produktes

Gemäß Beispiel 1 wurden 20 kg einer Fermentationsbrühe mit einem Gehalt von ca. 9,5 Gew.-% (als Lysinbase) hergestellt. Die in der Fermentationsbrühe vorhandene Biomasse wurde direkt im Bioreaktor durch eine thermische Behandlung für 30 Minuten bei 80°C inaktiviert. 1,0 l dieser Biomasse-haltigen Fermentationsbrühe wurde anschließend durch schrittweise Zugabe konzentrierter Schwefelsäure auf einen pH-Wert von ca. 4 eingestellt. Der Flüssigkeitsanteil dieser sauren lysinhaltigen Fermentationsbrühe wurde anschließend in einem Rotationsverdampfer (Laborrotationsverdampfer Büchi Rotavapor RE-120, Büchi-Labortechnik GmbH, Konstanz, Deutschland) unter Vakuum auf etwa 50% Trockengehalt reduziert.

Das auf diese Weise erhaltene flüssige Produkt hatte einen Gehalt an L-Lysin von 21,8 Gew.-% (als Lysin-Base) und einen pH-Wert von 4. Die Gesamttrockenmasse, betrug 50,7 Gew.-%. Nach einer Lagerung von 16 Monaten bei 20°C war keine signifikante Änderung des Gehaltes feststellbar.

## Patentansprüche

1. Tierfuttermittelsupplement auf Fermentationsbrühebasis mit hoher Stabilität,
**dadurch gekennzeichnet,**
**daß** es aus
a) L-Lysin und/oder deren Salze in einer Menge von 18 bis 35 Gew.-% (als L-Lysin-Base) bezogen auf die Gesamtmenge der Suspension,
b) der während der Fermentation gebildeten Biomasse in einer Menge von 50 bis 100 % und ganz besonders von 90 bis 100 %,
c) zumindest dem überwiegenden Teil der weiteren gelösten und suspendierten Inhaltsstoffe der Fermentationsbrühe besteht,
d) als Suspension vorliegt und
e) einen pH-Wert < (kleiner) 7 aufweist.

2. L-Lysin-haltige Suspensionen gemäß Anspruch 1 mit einem pH-Wert von 2 bis 6,5.

3. Tierfuttermittelsupplement gemäß Anspruch 1,
**dadurch gekennzeichnet,**
**daß** es das L-Lysin als Sulfatsalz enthält.

4. Verfahren zur Herstellung eines Lysin und/oder deren Salze enthaltenden Tierfuttermittelsupplements, bestehend aus den Schritten:
a) Herstellung einer L-Lysin -haltigen Brühe durch Fermentation, und
b) gegebenenfalls durch Zugabe von L-Lysin oder einer L-Lysin haltigen Lösung Einstellung der gewünschten Konzentration,
c) Einstellung der erhaltenen Brühe auf einen pH < (kleiner) 7 und
d) gegebenenfalls Aufkonzentration,
wobei die Reihenfolge der Schritte b), c) und d) beliebig sein kann, und
e) Gewinnung eines Produkts gemäß den Ansprüchen 1 bis 3 mit einem Gehalt von 18 bis 35 Gew.-% L-Lysin (als L-Lysin-Base).

5. Verfahren zur Herstellung eines Lysin und/oder deren Salze enthaltenden Tierfuttermittel-Additivs gemäß Anspruch 4 bestehend aus den Schritten:
a) Herstellung einer L-Lysin-haltigen Brühe durch Fermentation, und
b) Einstellung der erhaltenen Brühe auf einen pH-Wert < (kleiner) 7 und
c) aus dieser gegebenenfalls teilweise Abtrennung der Biomasse,
d) gegebenenfalls durch Zugabe von L-Lysin oder einer L-Lysin haltigen Lösung Einstellung der gewünschten Konzentration,
e) und gegebenenfalls Konzentrieren der so erhaltenen Brühe,
wobei die Reihenfolge der Schritte b), c), d) und e) beliebig sein kann, und
f) Gewinnung eines Produkts gemäß den Ansprüchen 1 bis 3 mit einem Gehalt von 18 bis 35 Ges.-% (als L-Lysin-Base) .

6. Verfahren gemäß den Ansprüchen 4 oder 5,
**dadurch gekennzeichnet,**
**daß** man den pH-Wert mit Schwefelsäure oder Phosphorsäure einstellt.

7. Verfahren gemäß den Ansprüchen 4 oder 5,
**dadurch gekennzeichnet,**
**daß** man den pH-Wert mit einer organischen Säure einstellt.

## Claims

1. A fermentation broth-based animal feed supplement having elevated stability,
**characterised in that**
it consists of
a) L-lysine and/or salts thereof in an amount of 18 to 35 wt.% (as L-lysine base) relative to the total amount of the suspension,
b) the biomass formed during fermentation in an amount of from 50 to 100% and very particularly from 90 to 100%,
c) at least the majority of the other dissolved and suspended constituents of the fermentation broth,
d) it is present as a suspension and
e) exhibits a pH of < (less than) 7.

2. L-lysine-containing suspensions according to claim 1 having a pH value of from 2 to 6.5.

3. Animal feed supplement according to claim 1,
**characterised in that**
it contains the L-lysine as the sulfate salt.

4. A process for producing an animal feed supplement containing lysine and/or salts thereof consisting of the steps:
a) producing an L-lysine-containing broth by fermentation, and
b) optionally establishing the desired concentration by the addition of L-lysine or a solution containing L-lysine,
c) adjusting the broth obtained to a pH of < (less than) 7, and
d) optional concentration,
wherein the order of the steps b), c) and d) may be varied at will, and
e) isolating a product according to claims 1 to 3 with a content of L-lysine (as L-lysine base) of 18 to 35 wt.%.

5. A process for producing an animal feed additive containing lysine and/or salts thereof according to claim 4 consisting of the steps:
a) producing an L-lysine-containing broth by fermentation, and
b) adjusting the broth obtained to a pH value of < (less than) 7, and
c) optionally partially separating off the biomass therefrom,
d) optionally establishing the desired concentration by the addition of L-lysine or a solution containing L-lysine,
e) and optionally concentrating the broth obtained in this way,
wherein the order of the steps b), c), d) and e) may be varied at will, and
f) isolating a product according to claims 1 to 3 with a content of L-lysine (as L-lysine base) of 18 to 35 wt.%.

6. A process according to claims 4 or 5,
**characterised in that**
the pH value is adjusted with sulfuric acid or phosphoric acid.

7. A process according to claims 4 or 5,
**characterised in that**
the pH value is adjusted with an organic acid.

## Revendications

1. Additif fourrager à base de moût de fermentation très stable,
**caractérisé en ce que**
a) il est constitué de L-lysine et/ou de ses sels dans une quantité de 18 à 35 % en poids (en tant que base L-lysine) par rapport à la quantité totale de la suspension,
b) de biomasse formée pendant la fermentation dans une quantité de 50 à 100 % et tout particulièrement de 90 à 100 %, et
c) au moins de la majeure partie des autres composants dissous et en suspension du moût de fermentation,
d) il se présente sous forme de suspension, et
e) présente un pH < (inférieur à) 7.

2. Suspensions contenant de la L-lysine selon la revendication 1, ayant un pH de 2 à 6,5.

3. Additif fourrager selon la revendication 1,
**caractérisé en ce qu'**
il contient de la L-lysine en tant que sels de sulfate.

4. Procédé de fabrication d'une lysine et/ou d'un additif fourrager contenant ses sels, comportant les étapes suivantes :
a) fabrication d'un moût contenant de la L-lysine, par fermentation, et
b) ajustement de la concentration souhaitée, le cas échéant par addition de L-lysine ou d'une solution contenant de la L-lysine,
c) ajustement du moût obtenu à un pH < (inférieur à) 7, et
d) le cas échéant, concentration, les étapes b), c) et d) pouvant se succéder dans n'importe quel ordre, et
e) obtention d'un produit selon les revendications 1 à 3, ayant une teneur de 18 à 35 % en poids de L-lysine (en tant que base L-lysine).

5. Procédé de fabrication d'une lysine et/ou d'un additif fourrager contenant ses sels selon la revendication 4, comportant les étapes suivantes :
a) fabrication d'un moût contenant de la L-lysine, par fermentation, et
b) ajustement du moût obtenu à un pH < (inférieur à) 7,
c) le cas échéant, séparation partielle de la biomasse de celui-ci,
d) le cas échéant, ajustement de la concentration souhaitée par addition de L-lysine ou d'une solution contenant de la L-lysine, et
e) le cas échéant, on concentre le moût ainsi obtenu, les étapes b), c), d) et e) pouvant se succéder à la convenance, et
f) obtention d'un produit selon les revendications 1 à 3, ayant une teneur de 18 à 35 % en poids de L-lysine (en tant que base L-lysine).

6. Procédé selon les revendications 4 ou 5,
**caractérisé en ce qu'**
on ajuste le pH avec de l'acide sulfurique ou de l'acide phosphorique.

7. Procédé selon les revendications 4 ou 5,
**caractérisé en ce qu'**
on ajuste le pH avec un acide organique.
